# EUROPEAN PATENT SPECIFICATION

(11) **EP 2 420 398 B1**
(45) Date of publication and mention of the grant of the patent: **24.07.2013**
(21) Application number: 11189624.7
(22) Date of filing: 09.12.2009
(51) Int. Cl.: B60G 17/005, B60G 17/016, B60G 21/00, B62D 9/02, B62K 5/00, B62K 25/20, B62K 25/24

(54) **Saddle riding type vehicle**
Sattelfahrzeug
Véhicule de type à enfourcher

(30) Priority: 19.12.2008 JP 2008324237
(43) Date of publication of application: 22.02.2012
(62) Divisional of application: 09178535.2
(73) Proprietor: Yamaha Hatsudoki Kabushiki Kaisha, Shizuoka-ken Shizuoka 438-8501 (JP)
(72) Inventor: Tsujii, Eiichirou, Shizuoka-ken, Shizuoka 438-8501 (JP); Hirano, Masayuki, Shizuoka-ken, Shizuoka 438-8501 (JP); Ogawa, Hirokatsu, Shizuoka-ken, Shizuoka 438-8501 (JP); Hara, Nobuo, Shizuoka-ken, Shizuoka 438-8501 (JP); Nishida, Kazuhiro, Shizuoka-ken, Shizuoka 438-8501 (JP); Takeuchi, Toshio, Shizuoka-ken, Shizuoka 438-0026 (JP)
(74) Representative: Stöckeler, Ferdinand

(56) References cited:
- EP-A1- 1 870 269
- EP-B1- 1 539 563
- WO-A1-2007/127783
- WO-A2-2007/041095
- JP-A- 54 025 033
- JP-A- 2005 313 876

## Description

### BACKGROUND OF THE INVENTION

### (1) Field of the Invention

The present invention relates to a saddle riding type vehicle capable of making turns by leaning the vehicle body, the vehicle being a three-wheeled or four-wheeled automotive vehicle having a pair of wheels at least at a front or rear portion of the vehicle body.

### (2) Description of the Related Art

A saddle riding type vehicle has heretofore been proposed that has a pair of wheels arranged at both sides of a front portion and/or rear portion of the vehicle body, and a support mechanism for supporting at least one pair of wheels to be movable substantially up and down in opposite directions relative to the vehicle body. The saddle riding type vehicle constructed in this way can make turns by leaning the vehicle body as does a motorcycle. Further, when the saddle riding type vehicle is running at low speed or is standing still, the vehicle body can lean as in the case of a motorcycle. Therefore, the vehicle usually is unstable when stopping (as disclosed in Japanese Unexamined Patent Publication S54-25033 (Patent Document 1) and Japanese Unexamined Patent Publication No. 2005-313876 (Patent Document 2), for example).

### Technique according to Patent Document 1

Patent Document 1 discloses a three-wheeled automotive vehicle a pair of wheels at the front of a vehicle body. The pair of wheels at the front are supported by a double wishbone type suspension mechanism. This double wishbone type suspension mechanism has Neidhardt springs, and restricts leaning of the vehicle body with the elastic force of the Neidhardt springs. Therefore, the vehicle has a relatively good stability even when running at low speed.

### Technique according to Patent Document 2

Patent Document 2 provides a roll mechanism held to form a shape of an articulated square by two crossbars arranged vertically and rotatably supported at the forward end of a main frame, a right side tube connected to right ends of both crossbars, and a left side tube connected to left ends of both crossbars. The pair of right and left tubes rotatably support a pair of wheels. The support mechanism constructed in this way supports the pair of wheels to be movable up and down relative to the main frame (vehicle body). Thus, the vehicle disclosed in Patent Document 2 can make turns while leaning the main frame with the pair of wheels contacting the traveling surface.

This saddle riding type vehicle further includes an antiroll device for fixedly holding a lean amount of the vehicle body. Thus, when running the vehicle at low speed or when stopping the vehicle, the antiroll device can be operated conveniently to prevent leaning of the vehicle body.

However, the conventional vehicles with such constructions have the following drawbacks and disadvantages.

With the vehicle described in Patent Document 1, the elastic force constantly acts as resistance to changes in position of the vehicle body. This lowers turning performance during an ordinary run when the vehicle runs at a certain speed or faster. Thus, the rider cannot run comfortably.

With the vehicle described in Patent Document 2, an operation of the antiroll device occurring when the vehicle body is in an unstable position causes an inconvenience of holding the vehicle body in that unstable position. If the antiroll device is released at such a time, the vehicle body is further destabilized upon release of the device.

WO 2007 127783 A1 describes a vehicle that includes a vehicle body and a vehicle support assembly. The vehicle body has a longitudinal axis and is configured for supporting a rider thereon. The support assembly includes first and second tilting wheels disposed respectively at different lateral positions with respect to the longitudinal axis, a tilt-mechanism supportively associating the vehicle body from the tilting wheels to enable the vehicle body to tilt through a first tilt range with respect to a surface on which the tilting wheels are disposed, and a tilt-limiter operably associated with the tilt-mechanism to restrict the tilting of the vehicle body to less than the first tilt range, and releasable to allow the tilting through the first tilt range .

### SUMMARY OF THE INVENTION

It is an object of the present invention to provide a saddle riding type vehicle having at least one pair of wheels, capable of making turns by leaning a vehicle body, and capable of adjusting a lean amount of the vehicle body according to vehicle speed.

This object is achieved by a saddle riding type vehicle according to claim 1.

The present invention provides a saddle riding type vehicle capable of making turns by leaning a vehicle body, comprising a support mechanism for supporting at least a pair of wheels provided at opposite sides of the vehicle body to be movable up and down relative to the vehicle body; an adjusting mechanism for operating the support mechanism to change a lean amount of the vehicle body; a speed detector for detecting vehicle speed; and a controller for controlling the adjusting mechanism based on results of detection by the speed detector, wherein the controller is arranged, when the vehicle speed is at a predetermined speed or less, for causing the adjusting mechanism to operate the support mechanism and when the vehicle speed is higher than the predetermined speed, for prohibiting the adjusting mechanism from operating the support mechanism, and wherein the adjusting mechanism includes a hydraulic cylinder having a rod movable backward and forward, and is arranged to move the rod into direct contact with the support mechanism for moving the support mechanism.

According to the present invention, the support mechanism is provided for supporting a pair of wheels to be movable up and down relative to the vehicle body. Thus, the vehicle can make turns by leaning the vehicle body with the pair of wheels contacting the traveling surface. The adjusting mechanism can operate the support mechanism to change a lean amount of the vehicle body forcibly. The controller controls the adjusting mechanism based on results of detection by the speed detector. As a result, the lean amount of the vehicle body can be adjusted according to vehicle speed. This ensures both comfortable traveling performance and stability of the vehicle.

Here, the "saddle riding type vehicle" includes, besides a vehicle driven by the rider straddling the saddle, a scooter type vehicle driven by the rider seated with his or her legs close together. The "vehicle body" refers to a main frame and components fixed to be integral therewith.

In embodiments of the invention the controller is arranged, when the vehicle speed is at a predetermined speed or less, for causing the adjusting mechanism to operate the support mechanism to decrease the lean amount of the vehicle body. Then, stability of the saddle riding type vehicle can be improved when at the predetermined speed or less.

In embodiments of the invention the adjusting mechanism is arranged, when the controller is at a stop, for maintaining a lean amount of the vehicle body as it was when the controller stopped. Then, the stability of the saddle riding type vehicle can be maintained even after the controller stops.

In embodiments of the invention the adjusting mechanism is separable from the support mechanism; and the controller is arranged, when prohibiting the adjusting mechanism from operating the support mechanism, for placing the adjusting mechanism and the support mechanism out of contact with each other. When the controller prohibits the adjusting mechanism from operating the support mechanism, a situation where the adjusting mechanism obstructs operation of the support mechanism can be avoided reliably.

In embodiments of the invention the vehicle further comprises a lean angle detector for detecting a lean angle of the vehicle body; wherein the controller is arranged, based on results of detection by the lean angle detector, for rendering variable an amount of operation by the adjusting mechanism of the support mechanism. Then, the controller can adjust the lean amount of the vehicle body accurately.

In embodiments of the invention the controller is arranged, based on results of detection by the lean angle detector, when the vehicle speed is at a predetermined speed or less, for reducing the lean amount of the vehicle body to substantially 0 degree. Then, the up-and-down direction of the vehicle body can be made substantially parallel to the vertical direction regardless of traveling surface conditions, for example.

In embodiments of the invention the rod is, by moving forward, capable of pressing the support mechanism, and by moving backward, separable from the support mechanism. With the rod separable from the support mechanism, when the rod is not pressing the support mechanism, a situation where the rod obstructs operation of the support mechanism can be avoided reliably.

In embodiments of the invention the adjusting mechanism includes a hydraulic circuit for moving the rod backward and forward, and varying a forward moving speed of the rod; the hydraulic circuit being arranged, until the rod contacts the support mechanism, for rendering the forward moving speed of the rod higher than when the rod is in contact with the support mechanism and presses the support mechanism. This construction can move the rod into contact with the support mechanism quickly.

In embodiments of the invention the hydraulic circuit includes a pilot-operated direction control valve operable by a pressure of hydraulic oil corresponding to a reaction force received by the rod, the hydraulic circuit being automatically switchable to a circuit for rendering the forward moving speed of the rod relatively low when the rod undergoes a predetermined reaction force. Then, the hydraulic circuit can automatically vary the forward moving speed of the rod in response to the pressure of hydraulic oil. As a result, the apparatus construction can be simplified. Further, in embodiments of the present invention, with the circuit for rendering the forward moving speed of the rod relatively low, a moving distance of the rod is adjustable.

In embodiments of the invention the controller is arranged, when prohibiting the adjusting mechanism from operating the support mechanism, for moving the rod backward to a predetermined retracted position. With the rod movable to the retracted position, the rod can be separated from the support mechanism when the adjusting mechanism is not operating the support mechanism.

In embodiments of the invention the vehicle further comprises a position detector for detecting the rod located in the retracted position; and an indicator for displaying information relating to control of the lean amount of the vehicle body; wherein the controller is arranged, based on results of detection by the position detector, for causing the indicator to display a warning when prohibiting the adjusting mechanism from operating the support mechanism, and the rod is determined absent from the retracted position. With this construction, an abnormal state of the saddle riding type vehicle can be notified to the rider of this vehicle and/or vehicles or people around.

In embodiments of the invention the vehicle further comprises a position detector for detecting the rod located in the retracted position; wherein the controller is arranged, based on results of detection by the position detector, for limiting the vehicle speed to a predetermined speed or less when prohibiting the adjusting mechanism from operating the support mechanism, and the rod is determined absent from the retracted position. By limiting the vehicle speed when there is a possibility of the rod unexpectedly contacting the support mechanism, its influence could be reduced even when the two components contacted each other.

In embodiments of the invention the pair of wheels are a right wheel and a left wheel; the support mechanism includes a right support member for supporting the right wheel to be movable up and down; a left support member for supporting the left wheel to be movable up and down; and a balancer member interlocked to the right support mechanism and the left support mechanism and rotatably supported by the vehicle body, for causing the right wheel and the left wheel to move up and down in an equal quantity and in opposite directions; and the adjusting mechanism includes a right adjusting mechanism for operating the right support member to adjust a height position of the right wheel relative to the vehicle body; and a left adjusting mechanism for operating the left support member to adjust a height position of the left wheel relative to the vehicle body. Then, the support mechanism and adjusting mechanism can be realized advantageously.

This specification further discloses the following not claimed embodiments :
(1) The vehicle as described, wherein the controller is arranged, when the vehicle speed is at a predetermined speed or less, for causing the adjusting mechanism to operate the support mechanism to reduce the lean amount of the vehicle body substantially to 0 degree.
   According to the embodiment set out in paragraph (1) above, the lean amount of the vehicle body becomes substantially 0 degree when the vehicle speed is at the predetermined speed or less. This advantageously secures stability of the saddle riding type vehicle.
(2) The vehicle as described, wherein the controller is arranged, when the controller starts, for driving the adjusting mechanism to reduce the lean amount of the vehicle body substantially to 0 degree.
   According to the embodiment set out in paragraph (2) above, the saddle riding type vehicle can be placed in a stable position every time the controller starts.
(3) The vehicle as described, wherein the lean amount of the vehicle body is a measure of an angle to which the vehicle body leans right or left relative to a substantially vertical direction.
   According to the embodiment set out in paragraph (3) above, positions of the vehicle body relative to the substantially vertical direction can be grasped accurately regardless of traveling surface conditions, for example.
(4) The vehicle as described, wherein the rod has a contact portion in form of a curved surface for contacting the support mechanism.
(5) The vehicle according to paragraph (4) above, wherein a portion of the support mechanism contacting the rod has a shape corresponding to the contact portion of the rod.
   According to the embodiment set out in paragraph (4) and (5) above, since the rod and support mechanism contact smoothly, the support mechanism can be operated advantageously by the adjusting mechanism.
(6) The vehicle as described, wherein the rod is movable backward to a position spaced from a range of movement of the support mechanism.
   According to the embodiment set out in paragraph (6) above, the rod and support mechanism can be placed in a noncontact state reliably.
(7) The vehicle as described, wherein the hydraulic circuit is arranged for moving the rod forward, with a differential circuit communicating with two oil chambers divided by a piston connected to the rod, until the rod contacts the support mechanism.
   According to the embodiment set out in paragraph (7) above, the rod can advantageously be moved fast forward.
(8) The vehicle as described, further comprising a contact detector for detecting the rod contacting the support mechanism, wherein the hydraulic circuit is arranged for rendering variable a forward moving speed of the rod based on results of detection by the contact detector.
   According to the embodiment set out in paragraph (8) above, the hydraulic circuit can advantageously render the forward moving speed of the rod variable.
(9) The vehicle as described, wherein the hydraulic circuit includes a hydraulic pressure source for pumping hydraulic oil, and a check valve for holding a position of the rod when the hydraulic pressure source stops.
   According to the embodiment set out in paragraph (9) above, since the position of the rod is held even when the hydraulic pressure source stops, the support mechanism can be maintained in a fixed state. As a result, a position of the saddle riding type vehicle can be maintained conveniently.
(10) The vehicle as described, wherein the retracted position is spaced from the range of movement of the support mechanism.
   According to the embodiment set out in paragraph (10) above, the rod in the retracted position is reliably prevented from contacting the support mechanism.
(11) The vehicle as described, wherein the controller is arranged, when causing the adjusting mechanism to operate the support mechanism, for causing the indicator to display that the control of the lean amount of the vehicle body is operative.
(12) The vehicle as described, wherein the controller is arranged, when prohibiting the adjusting mechanism from operating the support mechanism, for causing the indicator to display that the control of the lean amount of the vehicle body is inoperative.
   According to the embodiment set out in paragraph (11) and (12) above, the rider and others can be informed that the control of the lean amount of the vehicle body is operative or inoperative.
(13) The vehicle as described, further comprising an engine for generating a driving force; a fuel supply line for supplying a fuel-air mixture to the engine; and an ignition line for burning the fuel-air mixture supplied to the engine; wherein the controller is arranged, when limiting the vehicle speed to a predetermined speed or less, for restraining the driving force of the engine by controlling at least one of the fuel supply line and the ignition line.
   According to the embodiment set out in paragraph (13) above, the controller can check vehicle speed effectively.
(14) The vehicle as described, wherein the controller is arranged for controlling the right adjusting mechanism and the left adjusting mechanism independently of each other.
   According to the embodiment set out in paragraph (14) above, the controller can control the right support member and left support member independently of each other by controlling the right adjusting mechanism and left adjusting mechanism. This can adjust leaning of the vehicle body effectively.
(15) The vehicle as described, wherein the pair of wheels are provided at a rear portion of the vehicle body.
(16) The vehicle as described, wherein the right support member and the left support member are rockably supported by the vehicle body, and the right adjusting mechanism and the left adjusting mechanism are supported by the vehicle body, respectively.
   According to the embodiment set out in paragraph (16) above, the support mechanism can be realized advantageously.
(17) The vehicle as described, wherein the pair of wheels are a right wheel and a left wheel; the support mechanism includes a right support member for supporting the right wheel to be movable up and down; a left support member for supporting the left wheel to be movable up and down; and a balancer member interlocked to the right support mechanism and the left support mechanism and rotatably supported by the vehicle body, for causing the right wheel and the left wheel to move up and down in an equal quantity and in opposite directions; and the adjusting mechanism is arranged for rotating the balancer member to adjust a height position relative to the vehicle body of the right wheel and a height position relative to the vehicle body of the left wheel.
   According to the embodiment set out in paragraph (17) above, the support mechanism and adjusting mechanism can be realized advantageously.
(18) The vehicle as described, wherein the pair of wheels are provided at each of a front portion of the vehicle body and a rear portion of the vehicle body; the support mechanism supports the pair of wheels provided at the front portion of the vehicle body and the pair of wheels provided at the rear portion of the vehicle body to be movable up and down relative to the vehicle body, respectively; and the adjusting mechanism is arranged for moving up and down at least one of the pair of wheels at the front portion of the vehicle body and the pair of wheels at the rear portion of the vehicle body.

According to the embodiment set out in paragraph (18) above, where the support mechanism supports two pairs of wheels provided at the front portion and rear portion of the vehicle body, respectively, the adjusting mechanism moves up and down one or both of the pair of wheels at the front portion and rear portion. This allows the adjusting mechanism to adjust the lean amount of the vehicle body effectively.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a perspective view showing an outline construction of a saddle riding type vehicle according to the present invention;
Fig. 2 is a side view showing an outward appearance of the saddle riding type vehicle according to the invention;
Fig. 3 is a front view of the saddle riding type vehicle according to the invention;
Fig. 4 is a front view of the saddle riding type vehicle in a leaning state;
Fig. 5 is a perspective view showing an outline construction of the saddle riding type vehicle according to the invention;
Fig. 6 is a basic circuit of a hydraulic circuit;
Fig. 7 is an explanatory view of operation of the hydraulic circuit schematically showing hydraulic oil flows;
Fig. 8 is an explanatory view of operation of the hydraulic circuit schematically showing hydraulic oil flows;
Fig. 9 is an explanatory view of operation of the hydraulic circuit schematically showing hydraulic oil flows;
Fig. 10 is an explanatory view of operation of the hydraulic circuit schematically showing hydraulic oil flows;
Fig. 11 is a block diagram showing an outline construction of a control system;
Fig. 12 is a flow chart showing a control sequence according to the invention; and
Fig. 13 is a flow chart showing a modified control sequence.

### DESCRIPTION OF THE PREFERRED EMBODIMENTS

Preferred embodiments of the present invention will be described in detail hereinafter with reference to the drawings.

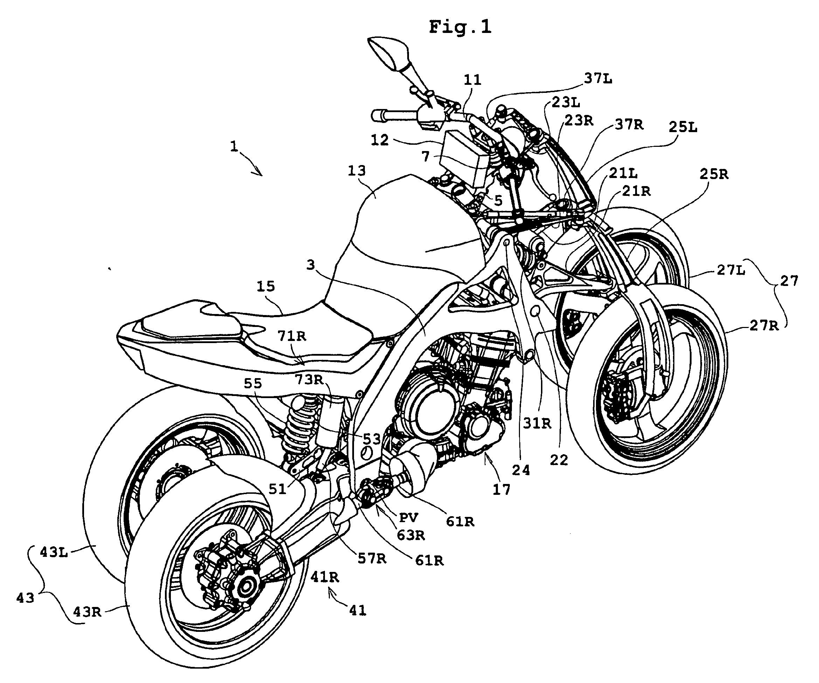

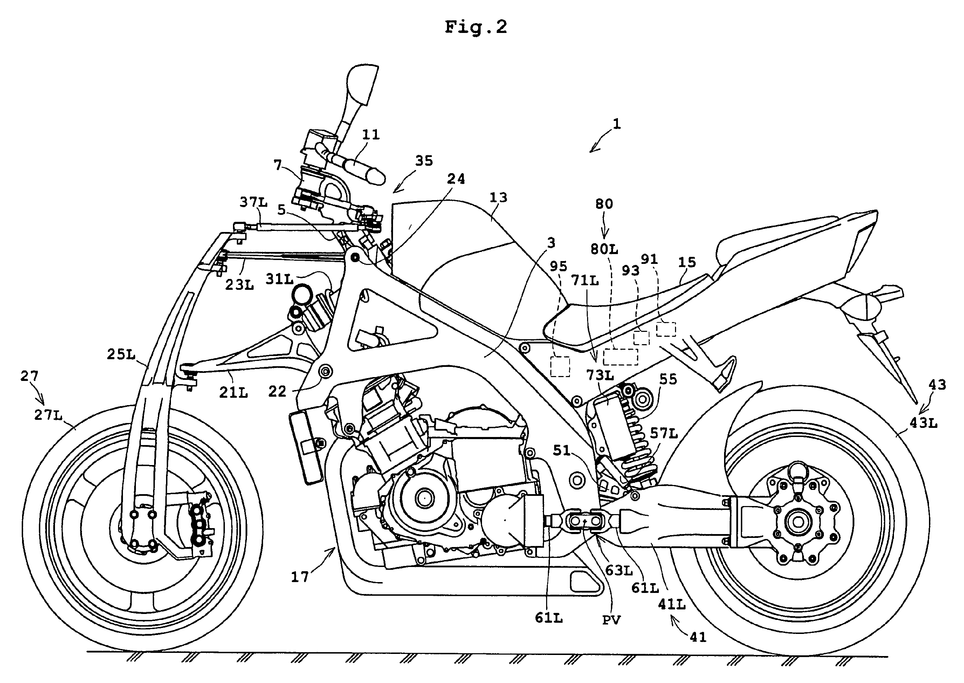

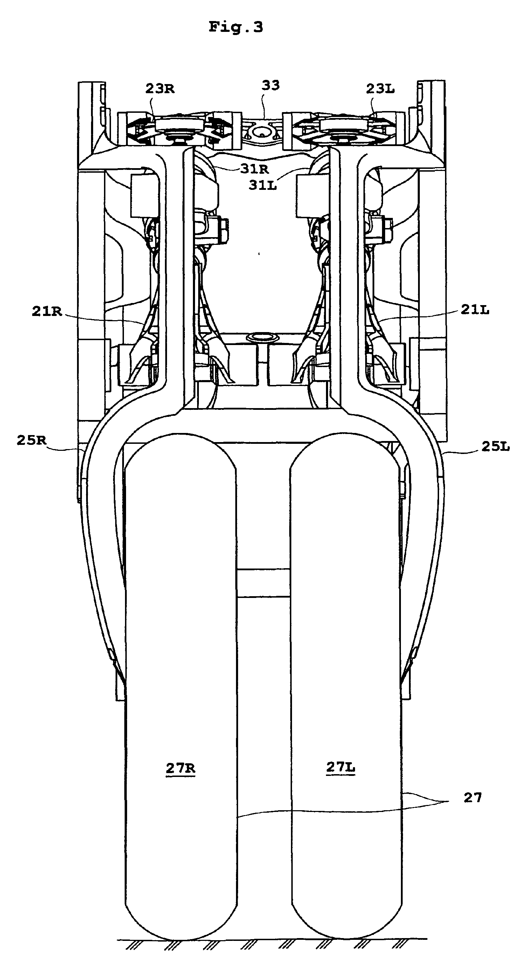

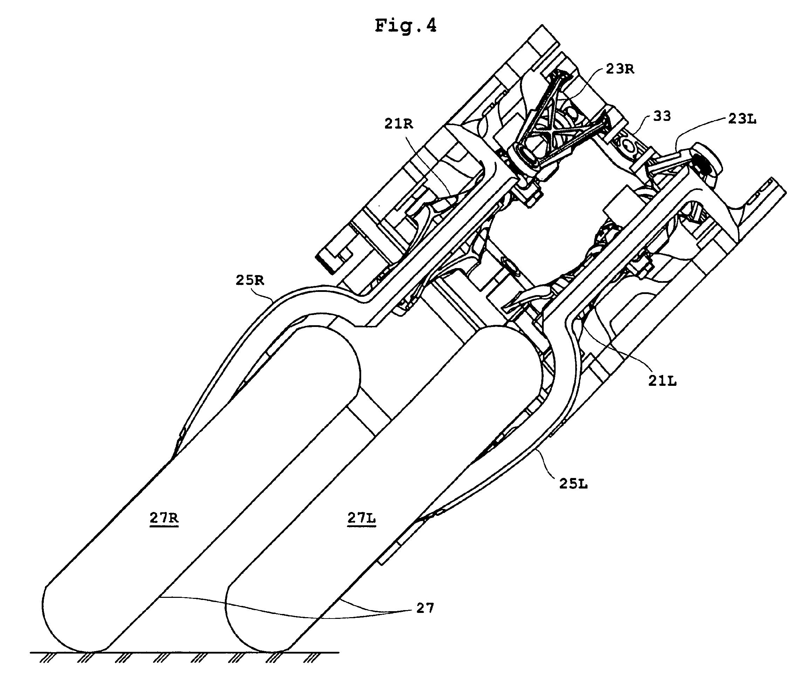

Fig. 1 is a perspective view showing an outline construction of a saddle riding type vehicle according to the present invention. Fig. 2 is a side view showing an outward appearance of the saddle riding type vehicle. Fig. 3 is a front view of the saddle riding type vehicle. Fig. 4 is a front view of the saddle riding type vehicle in a leaning state. A handlebar, a main frame and so on shown in Figs. 1 and 2 are omitted from Figs. 3 and 4. In the following description, the "right" and "left" refer to the sides seen from the rider seated on the saddle riding type vehicle 1. In Fig. 2, the left side of the drawing corresponds to the front of the saddle riding type vehicle 1, and right side of the drawing corresponds to the rear of the saddle riding type vehicle 1.

Referring mainly to Figs. 1 and 2, the saddle riding type vehicle 1 in this preferred embodiment is a four-wheeled automotive vehicle having pairs of wheels at the front and rear of a vehicle body, respectively. The saddle riding type vehicle 1 has a main frame 3 around the center of the vehicle body. A head pipe 7 is attached to the front (right in Fig. 1 and left in Fig. 2) of the main frame 3 through a support frame 5. The head pipe 7 has a handlebar 11 mounted thereon. An indicator panel 12 is disposed immediately rearward of the handlebar 11. A fuel tank 13 is mounted on an upper forward portion of the main frame 3, and a seat 15 is mounted rearward of the fuel tank 13. An engine 17 is mounted in a lower position of the main frame 3 below the fuel tank 13.

In the following description, this main frame 3 and components (e.g. the seat 15) rigidly secured to the main frame 11 will be referred to as the "vehicle body" where appropriate.

### <Construction Relating to the Front Wheels>

### 1. Support Mechanisms - Right Side and Left Side Support Mechanisms

Referring to Figs. 1 and 2, the main frame 3 has, attached to lower front positions thereof, a lower right arm 21 R and a lower left arm 21 L arranged transversely and extending forward of the vehicle body. Each of the lower right arm 21 R and lower left arm 21 L is supported by the main frame 3 to be rotatable about a lower pivot shaft 22. The main frame 3 has, attached to upper front positions thereof, an upper right arm 23R and an upper left arm 23L arranged transversely and extending forward of the vehicle body. Each of the upper right arm 23R and upper left arm 23L is supported by the main frame 3 to be rotatable about an upper pivot shaft 24.

A right knuckle arm 25R is connected to the other end of the lower right arm 21R. The right knuckle arm 25R extends obliquely upward, and is in a substantially middle position thereof connected to the other end of the upper right arm 23R. A right wheel 27R is rotatably supported by a lower portion of the right knuckle arm 25R. Joints at which the right knuckle arm 25R is connected to the lower right arm 21R and upper right arm 23 R, respectively, and positions of the lower pivot shaft 22 and upper pivot shaft 24, are arranged substantially to correspond to the vertexes of a parallelogram in side view.

Similarly, a left knuckle arm 25L is interlocked to the lower left arm 21 L and upper left arm 23L, with the left knuckle arm 25L supporting a left wheel 27L. The right wheel 27R and left wheel 27L are opposed to each other across the vehicle body.

With the lower right arm 21R and upper right arm 23R rotating in forward and reverse directions about the lower pivot shaft 22 and upper pivot shaft 24, respectively, the right knuckle arm 25R moves substantially up and down along the vehicle body. Consequently, the right wheel 27R moves up and down relative to the vehicle body. Similarly, with the lower left arm 21L and upper left arm 23L and left knuckle arm 25L moving as interlocked to one another, the left wheel 27L moves up and down relative to the vehicle body.

The right wheel 27R and left wheel 27L will be called collectively hereinafter the "right and left wheels 27" where appropriate. The right and left wheels 27 correspond to the pair of wheels (and more particularly, the pair of wheels arranged at the front of the vehicle body) in the present invention.

The lower right arm 21R, upper right arm 23R and right knuckle arm 25R correspond to the right side support mechanism in the present invention. The lower left arm 21L, upper left arm 23L and left knuckle arm 25L correspond to the left side support mechanism in the present invention.

### 2. Support Mechanism - Balancer Mechanism

A right shock absorber 31R is interlocked to the lower right arm 21R (see Fig. 1). A left shock absorber 31L is interlocked to the lower left arm 21L (see Fig. 2). The other ends of the right shock absorber 31R and left shock absorber 31L are interlocked to opposite ends of a balance beam 33, respectively (see Figs. 3 and 4). The balance beam 33 is supported by the main frame 3 to be rotatable about a shaft located in a middle position of the balance beam 33.

For example, the right lower arm 2 1 R rotates about the lower pivot shaft 22 to lower the right wheel 27R. At this time, the right lower arm 21R pulls down one end of the balance beam 33 through the right shock absorber 31R. This rotates the balance beam 33 to pull up the left lower arm 21 L through the left shock absorber 31L connected to the other end. As a result, the left wheel 27L moves up by an amount corresponding to the descent of the right wheel 27R. Thus, the right wheel 27R and left wheel 27L move up and down in equal amounts in substantially opposite directions relative to the vehicle body.

The right shock absorber 31R, left shock absorber 31L and balance beam 33 correspond to the balancer mechanism in the present invention. The above-noted right side support mechanism, left side support mechanism and balancer mechanism correspond to the support mechanism in the present invention.

### 3. Steering Mechanism

Referring to Figs. 1 and 2, a steering link mechanism 35 is interlocked to a lower portion of the handlebar 11 noted above (see Fig. 2). A right steering rod 37R and a left steering rod 37L are connected to the steering link mechanism 35. The other end of the right steering rod 37R is interlocked to an upper portion of the right knuckle arm 25R. The other end of the left steering rod 37L is interlocked to the left knuckle arm 25L. In response to operation of the handlebar 11, the right knuckle arm 25R and left knuckle arm 25L rotate about vertical axes, respectively, to give steering angles to the right and left wheels 27.

### <Construction Relating to the Rear Wheels>

### 1. Support Mechanisms - Right Side and Left Side Support Mechanisms

Reference is made to Figs. 1 and 2. The main frame 3 has, attached to lower rear positions thereof, a right rear arm 41 R and a left rear arm 41 L arranged transversely and extending rearward of the vehicle body. The right rear arm 41 R and left rear arm 41 L are supported by the main frame 3 to be rotatable about pivot shafts PV, respectively. The right rear arm 41 R rotatably supports a right wheel 43R at a rear end thereof. The left rear arm 41 L rotatably supports a left wheel 43L at a rear end thereof. The right wheel 43R and left wheel 43L are opposed to each other across the vehicle body.

When the right wheel 43R moves up and down relative to the vehicle body, the right rear arm 41R will rotate in opposite directions about the pivot shaft PV. Similarly, up-and-down motions of the left wheel 43L are interlocked to rocking of the left rear arm 41 L.

The right wheel 43R and left wheel 43L will be referred to hereinafter as the "right and left wheels 43" where appropriate. The right and left wheels 43 correspond to the pair of wheels (and more particularly, the pair of wheels arranged at the rear of the vehicle body) in the present invention. The right rear arm 41 R and left rear arm 41 L correspond to the right side support mechanism and left side support mechanism in the present invention, respectively.

### 2. Support Mechanism - Balancer Mechanism

Reference is made to Figs. 1 and 2. A carrier beam 51 is connected to the main frame 3 between the right rear arm 41 R and left rear arm 41 L. The carrier beam 51 rotatably holds a stabilizer 53. Further, a shock absorber 55 is interlocked to a forward end of the carrier beam 51. The other end of the shock absorber 55 is interlocked to the main frame 3. A right rod 57R and a left rod 57L are interlocked to opposite ends of the stabilizer 53, respectively (see Fig. 2 for the left rod 57L). The other end of the right rod 57R is interlocked to the right rear arm 41R. The other end of the left rod 57L is interlocked to the left rear arm 41 L.

When, for example, the right rear arm 41 R rotates about the pivot shaft PV with lowering of the right wheel 43R, the right rear arm 41R pulls down one end of the stabilizer 53 through the right rod 57R. This rotates the stabilizer 53 to pull up the left rear arm 41L through the left rod 57L connected to the other end. As a result, the left wheel 43L moves up by an amount corresponding to the descent of the right wheel 43R. Thus, the right wheel 43R and left wheel 43L move up and down in substantially opposite directions relative to the vehicle body.

The carrier beam 51, stabilizer 53, shock absorber 55, right rod 57R and left rod 57L correspond to the balancer mechanism in the present invention. The right side support mechanism and left side support mechanism associated with the right and left wheels 43 and the balancer mechanism correspond to the support mechanism in the present invention.

### 3. Drive Mechanism

Reference is made to Figs. 1 and 2. The engine 17 outputs a driving force to a pair of right and left drive shafts 6 1 R and 61 L through a bevel gear (not shown). The drive shaft 61R has a double cardon type joint 63R disposed in an intermediate position thereof. A rear portion of the drive shaft 61 R is rotatably held by the right rear arm 41R through a bearing (not shown). The drive shaft 61 R has a different bevel gear (not shown) provided at a rear end thereof, and the rear wheel 43R is connected to this bevel gear. The drive shaft 61L is similar in construction to the drive shaft 61 R.

### 4. Adjusting Mechanism

Reference is made mainly to Figs. 1 and 2. A right hydraulic cylinder 7 1 R and a left hydraulic cylinder 7 1 L are arranged in upper rear end regions of the main frame 3. The right hydraulic cylinder 71R is disposed above the right rear arm 41R, while the left hydraulic cylinder 71L is disposed above the left rear arm 41L. Since the right hydraulic cylinder 71 R and left hydraulic cylinder 71 L have substantially the same construction, the right hydraulic cylinder 71R will be described hereinafter by way of example.

The right hydraulic cylinder 71R has a right cylinder tube 73R and a right rod 75R. The right cylinder tube 73R is rigidly connected to the main frame 3. The right rod 75R is movable backward and forward relative to the right cylinder tube 73R. Fig. 1 shows a state of the right rod 75R having moved backward, and therefore the right rod 75R does not appear in Fig. 1.

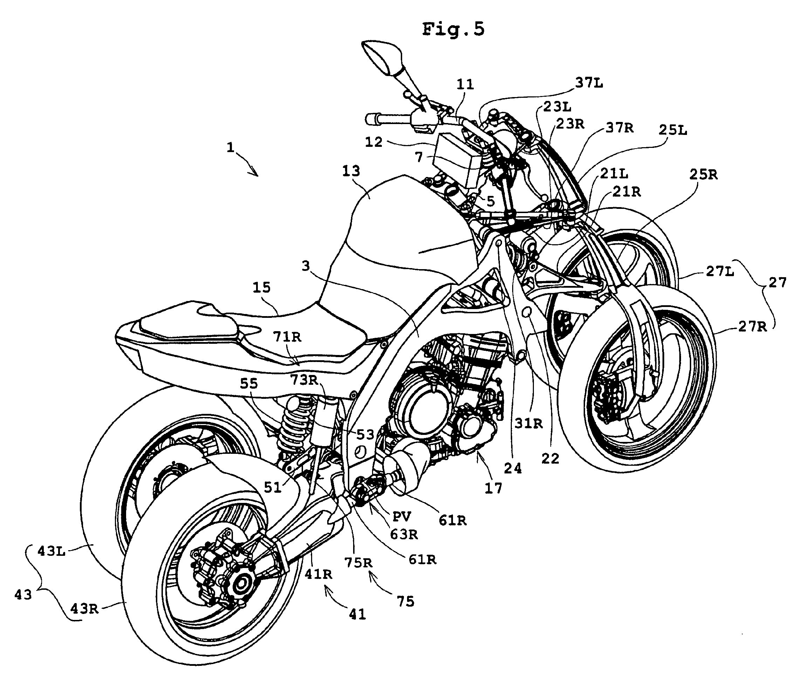

Reference is made to Fig. 5. Fig. 5 is a perspective view showing an outline construction of the saddle riding type vehicle according to the present invention, in which the right rod 75R is in an extended state. The right rod 75R can contact the right rear arm 41R by moving forward relative to the right cylinder tube 73R, and can press down the right rear arm 41R in the contacting state. The right rod 75R separates from the right rear arm 41R by moving backward relative to the right hydraulic cylinder 71R. Further, the right rod 75R is withdrawable to a retracted position spaced from a range of up-and-down motion of the right rear arm 41R.

The forward end of the right rod 75R has a convex, curved surface (for example, the forward end is semi-spherical), and this forward end makes direct contact with the right rear arm 41R. A concave, curved surface is formed in a corresponding position of the right rear arm 4 1 R (for example, that position has a concave shape), for smoothly contacting and separating from the forward end of the right rod 75R.

The right hydraulic cylinder 71 R constructed as described above and the left hydraulic cylinder 71 L are provided with a right hydraulic circuit 80R and a left hydraulic circuit 80L, respectively (see Fig. 2). The right hydraulic cylinder 71 R and right hydraulic circuit 80R correspond to the right adjusting mechanism in the present invention. The left hydraulic cylinder 71L and the left hydraulic circuit 80L correspond to the left adjusting mechanism in the present invention. Further, these right adjusting mechanism and left adjusting mechanism correspond to the adjusting mechanism in the present invention.

In the following description, the term hydraulic cylinder 71 will be used when not distinguishing the right hydraulic cylinder 71R and left hydraulic cylinder 71L. Similarly, the terms cylinder tube 73, rod 75 and hydraulic circuit 80 will be used.

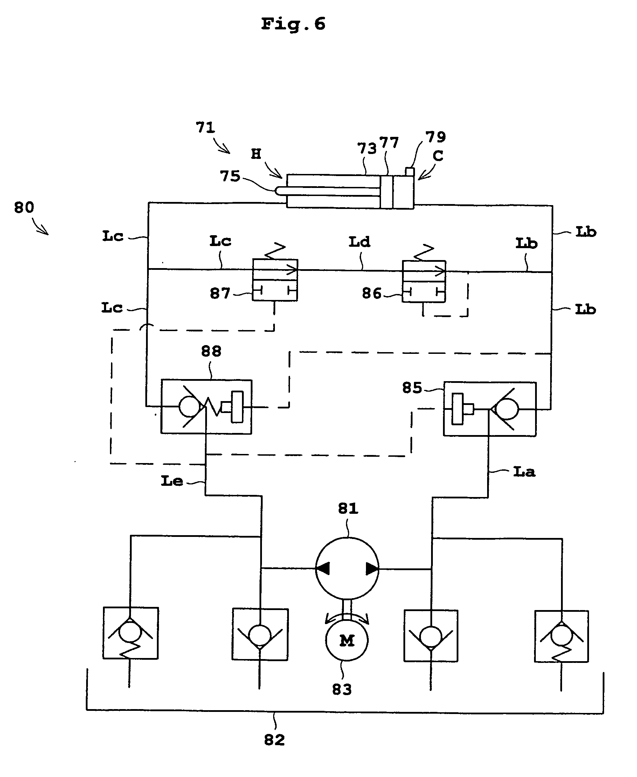

Reference is made to Fig. 6. Fig. 6 is a basic circuit of the hydraulic circuit associated with the hydraulic cylinder 71.

The hydraulic cylinder 71 is a differential cylinder drivable by a differential circuit. The interior of the cylinder tube 73 is divided into two oil chambers by a piston 77 connected to the rod 75. In the following description, one of the oil chambers housing the rod 75 will be referred to as "head-side oil chamber H", and the other oil chamber as "cap-side oil chamber C".

The cylinder tube 73 includes a position sensor 79 for detecting the rod 75 located in the retracted position. The retracted position is, for example, the position of the rod 75 shown in Fig. 6. The position sensor 79 corresponds to the position detector in the present invention.

The hydraulic circuit 80 includes a hydraulic pump 81 for pumping hydraulic oil supplied from an oil tank 82. The hydraulic pump 81 is driven by an electric motor 83. The hydraulic pump 81 is the double-acting type which discharges hydraulic oil selectively to line La and line Le. The hydraulic pump 81 corresponds to the hydraulic pressure source in the present invention.

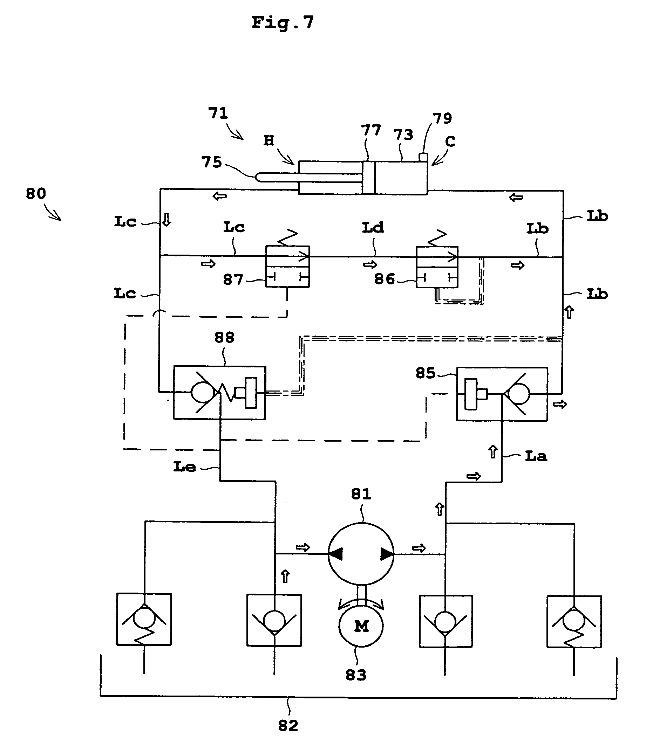

When moving the rod 75 forward, the hydraulic pump 81 pumps hydraulic oil to the cap-side oil chamber C through line La and line Lb. Hydraulic oil flows out of the head-side oil chamber H into line Lc. This line Lc is switchable for connection to line Ld and line Le selectively. Therefore, line Lc is never connected to both line Ld and line Le at the same time. When line Lc is connected to line Ld, the hydraulic oil flowing out of the head-side oil chamber H flows back to the cap-side oil chamber C. That is, the hydraulic circuit 80 acts as a differential circuit, whereby the rod 75 moves forward at a higher speed than a speed corresponding to a discharge flow rate of the hydraulic pump 81 (fast forward movement of the rod 75). Fig. 7 schematically shows paths of hydraulic oil flow in the hydraulic circuit 80 acting as the differential circuit.

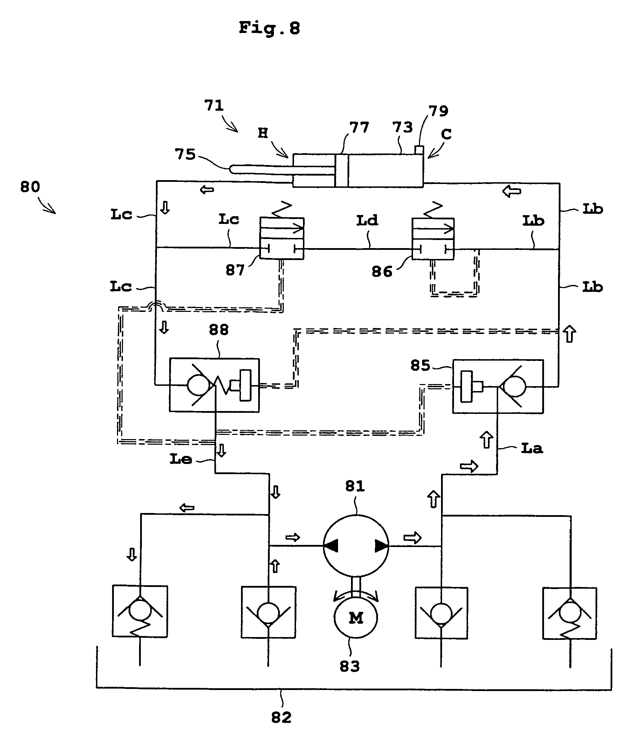

When line Lc is connected to line Le, the hydraulic oil flowing out of the head-side oil chamber H is returned to the oil tank 82. Therefore, the rod 75 moves forward at the speed corresponding to the discharge flow rate of the hydraulic pump 81, and by a distance corresponding to an amount of discharge. Fig. 8 schematically shows paths of hydraulic oil flow in this case.

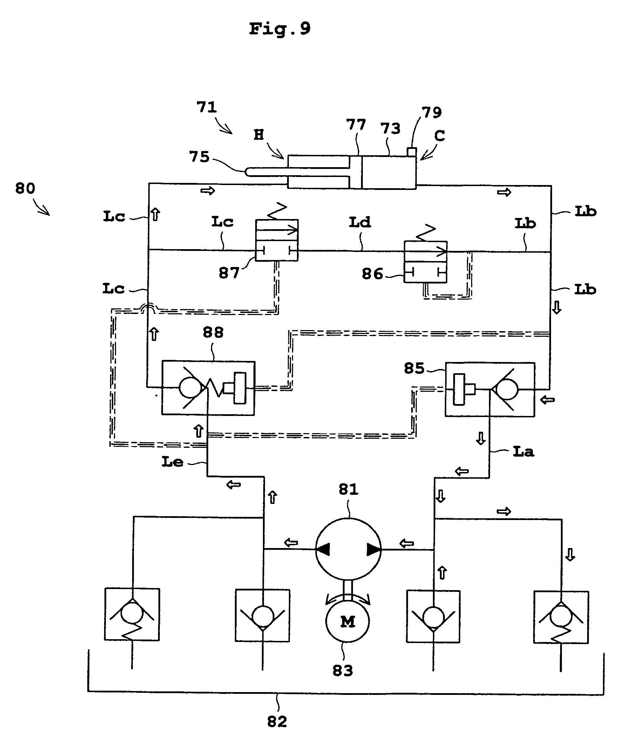

When moving the rod 75 backward, the hydraulic pump 81 pumps hydraulic oil to the head-side oil chamber H through line Le and line Lc. The hydraulic oil flowing out of the cap-side oil chamber C is returned to the oil tank 82 through line Lb and line La. Fig. 9 schematically shows paths of hydraulic oil flow in this case.

The construction provided for the hydraulic circuit 80 to function in this way will be described. A check valve 85 is the pilot-operated type, and is disposed between line La and line Lb. The check valve 85 has a pilot control port thereof connected to line Le. The check valve 85, while permitting hydraulic oil to flow in one direction, permits hydraulic oil to flow also in the opposite direction when hydraulic oil is supplied to line Le.

A selector valve 86 is a pilot-operated, two-port, two-position valve, and is provided between line Lb and line Ld. The selector valve 86 is open in the neutral position. The selector valve 86 has a pilot control port thereof connected to line Lb. The selector valve 86 is open when the pressure in line Lb is below pilot pressure Pc, and is closed when the pressure in line Lb is at pilot pressure Pc or above.

A selector valve 87 is a pilot-operated, two-port, two-position valve, and is provided between line Lc and line Ld. The selector valve 87 is open in the neutral position. The selector valve 87 has a pilot control port thereof connected to line Le. The selector valve 86 is open when hydraulic oil is not supplied to line Le, and is closed when hydraulic oil is supplied to line Le.

A check valve 88 is the spring-loaded, pilot-operated type, and is provided between line Lc and line Le. The check valve 88 has a pilot control port thereof connected to line Lb. The check valve 88, while permitting hydraulic oil to flow in one direction, shuts off flow in the opposite direction when the pressure in line Lb is below pilot pressure Pc, and permits hydraulic oil to flow also in the opposite direction when the pressure in line Lb is at pilot pressure Pc or above.

In this embodiment, pilot pressure Pc is set to a value equivalent to a hydraulic pressure of hydraulic oil produced in line Lb when the rod 75 receives a reaction force of 50 [N], for example.

When the hydraulic pump 81 pumps hydraulic oil to the cap-side oil chamber C through line La and line Lb, hydraulic oil will flow out of the head-side oil chamber H through line Lc. When the pressure in line Lb is below pilot pressure Pc, the selector valve 86 is open and the check valve 88 shuts off flow in the opposite direction. Consequently, since hydraulic oil is not supplied to line Le, the selector valve 87 is open and the check valve 85 shuts off flow in the opposite direction. The hydraulic oil flowing out of line Lc enters line Lb through line Ld to be fed to the cap-side oil chamber C. This causes the rod 75 to move forward at a relatively high speed. In the following description, this operation is called "fast forward mode".

When the rod 75 receives a reaction force of 50 [N] or more, for example, and the pressure of hydraulic oil in line Lb becomes pilot pressure Pc or higher, the selector valve 86 shuts off line Lc and the check valve 88 permits flow in the opposite direction. The hydraulic oil flowing out of line Lc flows into line Le to return to the oil tank 82. With the hydraulic oil supplied to line Le, the selector valve 87 is closed and the check valve 85 permits hydraulic oil to flow also in the opposite direction. This causes the rod 75 to move forward at a lower speed than in the fast forward mode. The rod 75 moves a distance corresponding to the discharge of hydraulic oil from the hydraulic pump 81. In the following description, this operation is called "fine adjust mode". The selector valve 86 and check valve 88 correspond to the pilot-operated direction control valve in the present invention.

When the direction of discharge from the hydraulic pump 81 is switched to pump hydraulic oil to the head-side oil chamber H through line Le and line Lc, hydraulic oil will flow out of the cap-side oil chamber C through line Lb. With hydraulic oil supplied to line Le, the selector valve 87 is closed and the check valve 85 permits hydraulic oil to flow also in the opposite direction. Consequently, the hydraulic oil flowing out of line Lb flows in the opposite direction through the check valve 85 to return to the oil tank 82. Since the pressure of hydraulic oil in line Lb is below pilot pressure Pc, the check valve 88 shuts off flow of hydraulic oil in the opposite direction. This causes the rod 75 to move backward by a distance corresponding to the discharge of hydraulic oil from the hydraulic pump 81.

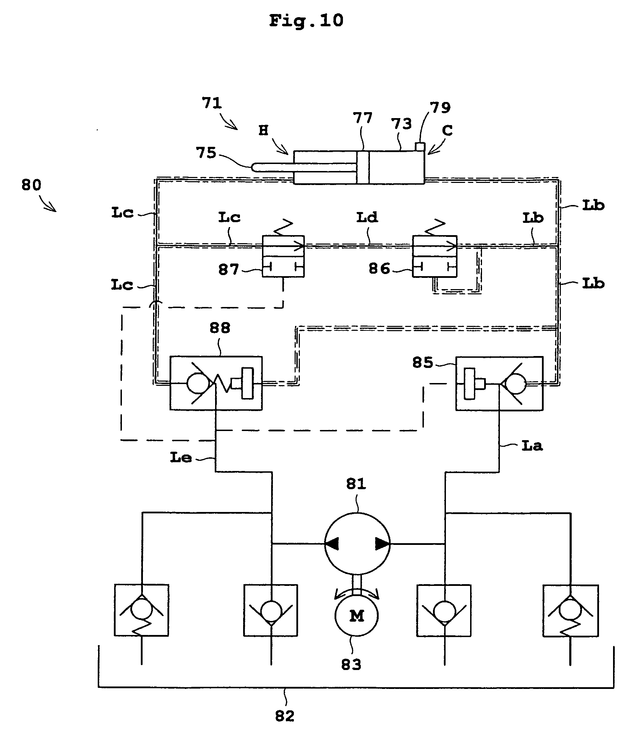

Finally, what takes place when the hydraulic pump 81 is stopped will be described with reference to Fig. 10. When the hydraulic pump 81 stops, hydraulic oil will no longer be supplied to line Le, whereby the selector valve 87 opens and the check valve 85 shuts off flow of hydraulic oil in the opposite direction. Since the pressure of hydraulic oil in line Lb is below pilot pressure Pc, the check valve 88 shuts off flow of hydraulic oil in the opposite direction. Consequently, it becomes impossible for hydraulic oil to flow out of line Lb, line Lc and line Ld. The hydraulic pressures of hydraulic oil in line Lb, line Lc and line Ld remain unchanged from when the hydraulic pump 81 is stopped. This maintains the rod 75 in the same position as when the hydraulic pump 81 is stopped.

### <Detectors>

Next, various detectors provided for the saddle riding type vehicle 1 will be described with reference to Fig. 2. The saddle riding type vehicle 1 has a speed sensor 91 for detecting vehicle speed, and a lean sensor 93 for detecting lean angle. Here, the lean angle is an angle of the vehicle body leaning right or left relative to a substantially vertical direction, and takes a positive or negative value depending on the leaning direction. A lean amount is a measure of the lean angle (absolute value of the lean angle). The lean sensor 93 will serve the purpose if it can detect lean angles under 0 [km/h] or low vehicle speed conditions. Accurate detection is not required when vehicle speed is relatively high, or when centrifugal force acts on the saddle riding type vehicle 1 (lean sensor 93). The speed sensor 91 corresponds to the speed detector in the present invention. The lean sensor 93 corresponds to the lean angle detector in the present invention.

### <Controller>

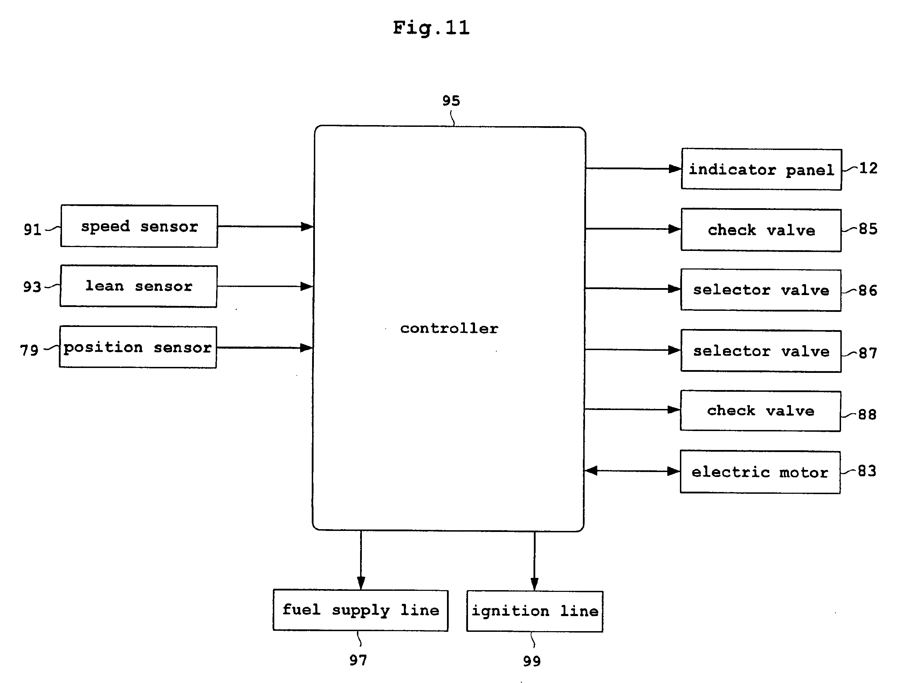

Fig. 11 is a block diagram showing an outline construction of a control system provided for the saddle riding type vehicle 1. A controller 95 receives detection results from the speed sensor 91 and lean sensor 93, and operating states of the various direction control valves 85-88 of the hydraulic circuit 80. The controller 95 controls output of the electric motor 83, and receives input of a current value of the electric motor 83. Further, the controller 95 outputs various types of information to the indicator panel 12. The inputs from the various direction control valves 85-88 and the input and output from/to the electric motor 83 are separate and independent for the right hydraulic circuit 80R and left hydraulic circuit 80L. Further, the controller 95 controls a fuel supply line 97 for supplying fuel (fuel-air mixture) to the engine 17, and an ignition line 99 for igniting and burning the fuel-air mixture. The controller 95 is realized by a central processing unit (CPU) for performing various processes and a storage medium, or a microcomputer.

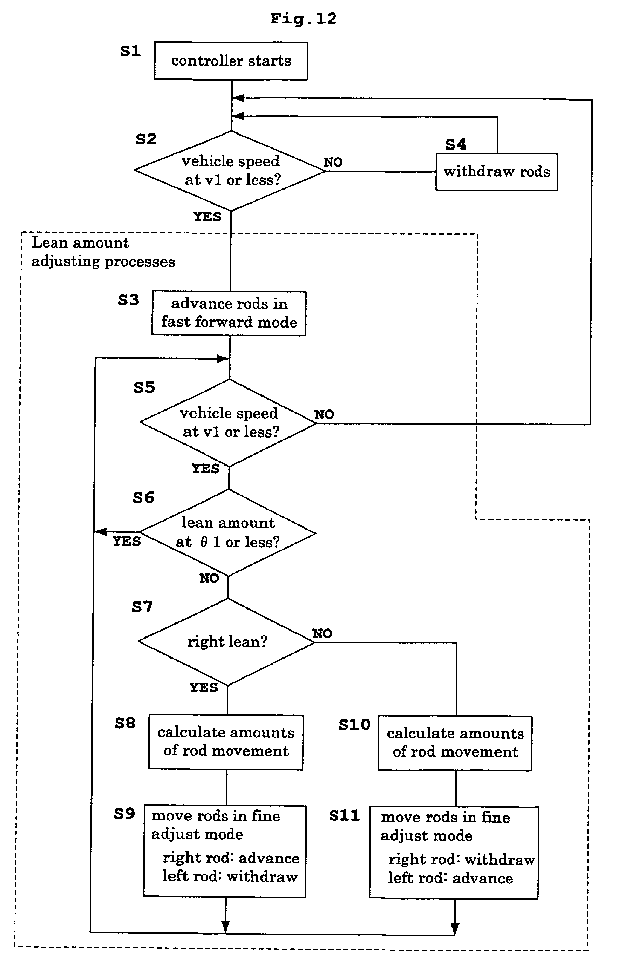

Next, operation of the saddle riding type vehicle 1 in this embodiment will be described with reference to Fig. 12. Fig. 12 is a flow chart showing a sequence of controls by the controller 95.

### <Step S1> Controller starts

When the rider turns on the ignition key, the controller 95 will start.

### <Step S2> Vehicle speed at v1 or less?

Based on a detection result from the speed sensor 91 the controller 95 determines whether or not vehicle speed is at a predetermined speed v1 or less. The speed v1 is 5 [km/h], for example. When vehicle speed is at speed v1 or less, the operation proceeds to step S3 to carry out a series of lean amount adjusting processes. When vehicle speed is higher than speed v1, the operation proceeds to step S4.

### <Step S3> Advance rods in fast forward mode

The controller 95 drives the respective electric motors 83 to move the right rod 75R and left rod 75L forward. At this time, the right hydraulic circuit 80R operates in the fast forward mode until the right rod 75R receives a reaction force of 50 [N]. Similarly, the left hydraulic circuit 80L operates in the fast forward mode until the left rod 75L receives a reaction force of 50 [N]. When the same operation is carried out at the right and left, the terms rod(s) 75, hydraulic circuit(s) 80, rear arm(s) 41 and so on will be used hereinafter.

When each rod 75 contacts the corresponding rear arm 41, the reaction force will exceed 50 [N] and the hydraulic circuit 80 will automatically switch to the fine adjust mode. When the controller 95 determines from a detector, not shown, that the hydraulic circuit 80 has switched to the fine adjust mode, the operation proceeds to step S5.

In step S3, the controller 95 causes the indicator panel 12 to indicate that the lean amount of the vehicle body is being adjusted forcibly or positively. This indication is continued over a period during which the lean amount adjusting processes are taking place. In this way, accurate information can be given to the rider.

### <Step S4> Withdraw rod

The controller 95 drives the electric motor 83 to move the rod 75 back to the retracted position. This places the rod 75 out of contact with the rear arm 41. Then, the operation returns to step S2.

As a result, action of the rear arm 41 is not obstructed by the rod 75. The rider can drive the saddle riding type vehicle 1 by leaning it freely. At this time, the controller 95 causes the indicator panel 12 to indicate that the lean amount of the vehicle body is not being adjusted forcibly or positively.

When, in the case of withdrawing the rod 75 in this way, the controller 95 determines based on a detection result from the position sensor 79 that the rod 75 is not located in the retracted position, the controller 95 causes the indicator panel 12 to display a warning that the rod 75 is not fully withdrawn. At the same time, the controller 95 controls the fuel supply line 97 and/or ignition line to restrain the driving force of the engine 17, thereby to keep the speed of the saddle riding type vehicle 1 in check.

### <Step S5> Vehicle speed at v1 or less?

Based on a detection result from the speed sensor 91 the controller 95 determines whether or not vehicle speed is at speed v1 or less. When vehicle speed is at speed v1 or less, the operation proceeds to step S6. When vehicle speed is higher than speed v1, the operation proceeds to step S4, and terminates the lean amount adjusting processes.

### <Step S6> Lean amount at θ1 or less?

Based on a detection result from the lean sensor 93 the controller 95 determines whether or not the lean amount is at angle θ1 or less. The lean amount is the absolute value of a lean angle. Angle θ1 is 0.5 degree, for example. When the lean amount is at angle θ1 or less, the operation returns to step S5. When the lean amount exceeds angle θ1, the operation proceeds to step S7.

### <Step S7> Right Lean?

Based on a detection result from the lean sensor 93 the controller 95 determines to which side the vehicle body is leaning. When it is a right lean, with the vehicle body leaning rightward, the operation proceeds to step S8. When it is not a right lean, that is when it is a left lean, the operation proceeds to step S 10.

### <Step S8> Calculate amounts of rod movement

An arithmetic process is carried out to calculate a control amount for the right support mechanism (right rear arm 41R) and left support mechanism (left rear arm 41 L) according to a lean angle of the vehicle body. This arithmetic process determines a control amount for changing the lean amount of the vehicle body to 0 degree. This process calculates an amount of movement (moving distance [mm]) of each of the right rod 75R and left rod 75L which corresponds to the control amount. Step S8 is executed to calculate a control amount for returning the vehicle body leaning right to neutral position, and more particularly a forward moving distance [mm] for the right rod 75R and a backward moving distance [mm] for the left rod 75L. Further, the forward moving distance and backward moving distance of the respective rods 75 are converted into amounts of drive (e.g. current values) of the electric motors 83. Alternatively, amounts of drive of the electric motors 83 may directly be calculated according to a lean angle of the vehicle body. In this case also, amounts of rod movement corresponding to amounts of drive of the electric motors 83 are calculated all the same.

### <Step S9> Move rods in fine adjust mode

Based on the amounts of drive calculated in step S8, the controller 95 drives the electric motors 83. Since the hydraulic circuits 80 operate in the fine adjust mode, the right rod 75R moves a predetermined distance forward, and the left rod 75L a predetermined distance backward. The right rod 75R presses down the right rear arm 41R. Since this moves up the left rear arm 41 L, the left rod 75L and left rear arm 41L are maintained in contact with each other even though the left rod 75L is withdrawn. Thus, with each of the right and left rods 75 pressing down the corresponding rear arm 41, the lean amount of the vehicle body is adjusted to 0 degree. Then, the operation returns to step S5.

Since the saddle riding type vehicle 1 is placed in the neutral position where the up-and-down direction of the vehicle body is substantially parallel to the vertical direction, which increases stability of the saddle riding type vehicle 1. Consequently, the saddle riding type vehicle 1 can be stopped, started or driven at extremely low speed without wobbling.

### <Step S 1 0> Calculate amounts of rod movement

A process similar to that of step S8 is carried out to calculate amounts of movement of the rods 75. Step S10 is executed to calculate control amounts for returning the vehicle body leaning left to the neutral position, and that is a backward moving distance [mm] for the right rod 75R and a forward moving distance [mm] for the left rod 75L.

### <Step S11> Move rods in fine adjust mode

Based on the amounts of drive calculated in step S10, the controller 95 drives the electric motors 83. This moves the right rod 75R backward, and the left rod 75L forward. The lean amount of the vehicle body is adjusted to 0 degree. Then, the operation returns to step S5.

Thus, with the saddle riding type vehicle 1 in this embodiment, the controller 95 controls the rear arms 41 with the rods 75 in response to the detection result from the speed sensor 91. Switching can be made, based on vehicle speed, between a situation for adjusting a lean amount of the vehicle body, and a situation for not adjusting a lean amount. This ensures both comfortable traveling performance and stability of the vehicle.

When vehicle speed is at speed v1 or less, the controller 95 forcibly adjusts the lean amount of the vehicle body to be substantially 0 degree. This can improve stability of the saddle riding type vehicle 1. Since the controller 95 carries out the control based on a detection result from the lean sensor 93 at this time, the lean amount of the vehicle body can be adjusted properly. Whatever gradient the traveling surface may have, the up-and-down direction of the vehicle body can be made substantially parallel to the vertical direction. The lean sensor 93 can detect lean angles accurately when vehicle speed is relatively low. Therefore, in step S6, the detection result from the lean sensor 93 has sufficient accuracy.

Since each adjusting mechanism is constructed to have the hydraulic cylinder 71, the adjusting mechanism is made relatively compact. Since a relatively strong force can be produced with the hydraulic cylinder 71, the rear arm 41 can be controlled appropriately.

Since the controller 95 controls the right hydraulic cylinder 71R and left hydraulic cylinder 71 L independently of each other, each of the right rear arm 4 1 R and left rear arm 4 1 L can be moved accurately.

The controller 95 does not adjust lean amounts of the vehicle body when vehicle speed is higher than speed v1. That is, the rear arm 41 is not operated by the hydraulic cylinder 71. Since the vehicle body is not prevented from leaning, the rider can drive the vehicle while leaning the vehicle body freely.

At this time, the controller 95 places the hydraulic cylinder 71 and rear arm 41 out of contact with each other. Consequently, there is no possibility of the action of the rear arm 41 being obstructed by the hydraulic cylinder 71. The rod 75 is not connected to the rear arm 41, but only contacts and presses the rear arm 41. Therefore, the hydraulic cylinder 71 and rear arm 41 are easily separable. When retracting the rod 75, the rod 75 is withdrawn to the retracted position spaced from the range of movement of the rear arm 41. Thus, there is no possibility of the rod 75 and rear arm 41 contacting each other.

The hydraulic circuit 80 provided for the adjusting mechanism is operable in the fast forward mode until the rod 75 receives a predetermined reaction force, and is switched to the fine adjust mode when the rod 75 receives the predetermined reaction force. The fast forward mode can move the rod 75 into contact with the rear arm 41 promptly. The fine adjust mode can accurately move the rod 75 a predetermined amount (predetermined distance) forward or backward. Switching between the fast forward mode and fine adjust mode is made when the rod 75 receives the predetermined reaction force (e.g. 50 [N] in the embodiment). It is therefore possible to prevent effectively a malfunction such as of the switching taking place when the rod 75 and rear arm 41 are not in contact.

The hydraulic circuit 80, with the selector valve 86 and check valve 88 operable in response to the pressure of hydraulic oil in line Lb, is automatically switchable between the fast forward mode and fine adjust mode. Thus, the hydraulic circuit 80 can be simple in construction.

Since the hydraulic circuit 80 includes the check valve 85 and check valve 88, the position of the rod 75 is maintained also when the hydraulic pump 81 is at a stop. Thus, the stability of the saddle riding type vehicle 1 is secured even when the hydraulic pump 81 is not driven. The saddle riding type vehicle 1 does not lean easily even when the controller 95 is stopped by turning off the ignition key, for example.

Since the controller 95 displays various types of information on the indicator panel 12, the rider can drive the vehicle 1 appropriately. Further, control is carried out to restrain vehicle speed when the lean amount of the vehicle body is not adjusted (i.e. when the "lean amount adjusting processes" in Fig. 12 are off) and the rod 75 is not in the retracted position. This can minimize the influence, if at all, of the rod 75 and rear arm 41 unexpectedly contacting each other.

Further not claimed embodiments:
(1) In the foregoing embodiment, the hydraulic circuit 80 is constructed automatically switchable between the fast forward mode and fine adjust mode in response to the pressure of hydraulic oil in line Lb, but this is not limitative. For example, a contact detector may be provided for detecting contact between the rod 75 and rear arm 41, and based on a detection result from this contact detector the switching may be made between the fast forward mode and fine adjust mode. The contact detector may be a load cell, proximity switch or limit switch, for example. The various valves of the hydraulic circuit 80 may be replaced with electromagnetic valves or electromagnetic selector valves, to be able to control the switching between the fast forward mode and fine adjust mode.

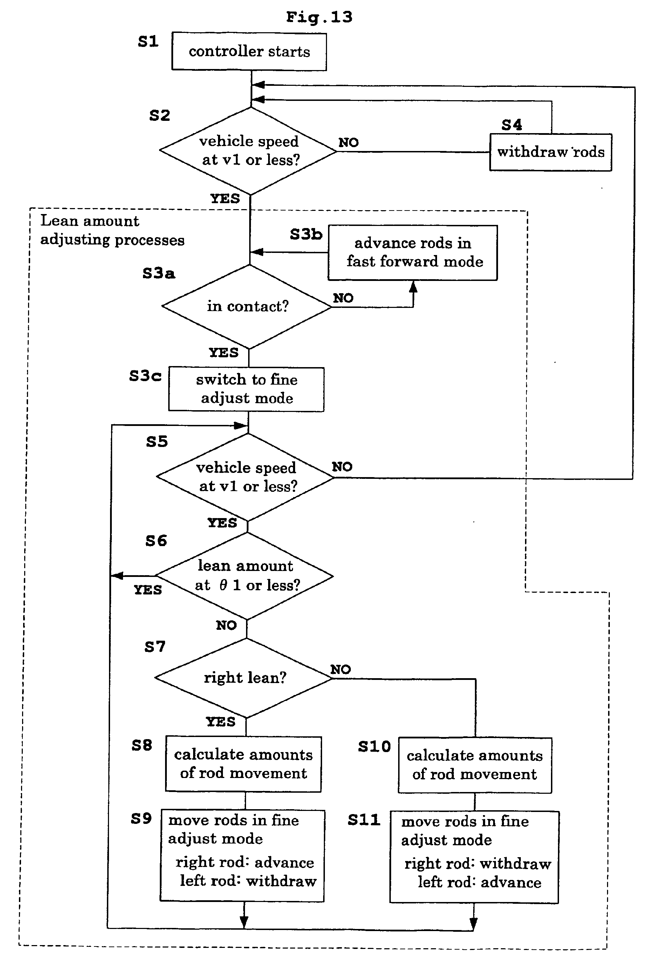

In the case of this modification, the flow chart shown in Fig. 12 is changed as appropriate. One example will be described with reference to Fig. 13. Fig. 13 is a flow chart showing a sequence of controls by the controller 95 according to the modification. This flow chart includes steps S3a, S3b and S3c in place of step S3 in the flow chart shown in Fig. 12. Steps S3a through S3c will be described briefly hereinafter.

In step S3a, the controller 95 determines, based on a detection result from the above-noted contact detector, whether the rod 75 and rear arm 41 are in contact. When found not in contact, the operation proceeds to step S3b. When found in contact, the operation proceeds to step S3c. In step S3b, the controller 95 controls the hydraulic circuit 80 to advance the rod 75 in the fast forward mode. Then, the operation returns to step S3a. In step S3c, the controller 95 operates predetermined electromagnetic valves of the hydraulic circuit 80 to switch from the fast forward mode to the fine adjust mode. Then, the operation proceeds to step S5.
(2) In the foregoing embodiment, the switching between the fast forward mode and fine adjust mode is timed to occur with contact between the rod 75 and rear arm 41, but this is not limitative. For example, it may be modified such that the switching occurs when the rod 75 and rear arm 41 approach each other within a predetermined distance.
(3) In the foregoing embodiment, the specific numerical values have been given, by way of example, to speed v1, reaction force on the rod 75 and angle θ1, but these are not limitative. These values are a matter of design and choice which can be selected as appropriate according to the characteristics of the saddle riding type vehicle 1, for example.
(4) In the foregoing embodiment, an adjustment is made so that the lean amount of the vehicle body may become 0 degree, but this is not limitative. An adjustment may be made so that the lean amount of the vehicle body may become a target value which may be any desired angle. An adjustment may be made simply to reduce the lean amount of the vehicle body. Or an adjustment may be made so that the lean amount of the vehicle body may become within an arbitrary range (e.g. 0.5 degree or less).

In this case, the controller 95 does not advance each rod 75 to the position for contacting the rear arm 41, but advances each rod 75 to a position for permitting a predetermined amount of rocking of the rear arm 41. As a result, both of the right rear arm 41 R and left rear arm 41 L are rockable until one of the right rear arm 41 R and left rear arm 41 L contacts the corresponding rod 75, and the vehicle body can lean within a range corresponding to the rocking.
(5) The foregoing embodiment provides the lean sensor 93, but the lean sensor 93 is dispensable. That is, when premised on running over a substantially level surface, the lean amount of the vehicle body can be adjusted based only on a positional relationship between the right rod 75R and left rod 75L.
(6) In the foregoing embodiment, the hydraulic cylinder 71 operates the rear arm 41, but this is not limitative. For example, the hydraulic cylinder 71 may operate the stabilizer 53 instead. This modification also can adjust a lean amount of the vehicle body effectively.
(7) In the foregoing embodiment, the hydraulic cylinder 71 and rear arm 41 are not connected to each other, but this is not limitative. For example, the hydraulic cylinder 71 and rear arm 41 may be operatively connected to each other. In this modification, since the rear arm 41 can be moved upward also by moving the rod 75 backward, a lean amount of the vehicle body can be adjusted effectively. That is, the lean amount of the vehicle body is adjustable even with a single hydraulic cylinder.
(8) In the foregoing embodiment, the hydraulic cylinders 71 control the support mechanisms corresponding to the right and left wheels 43, but this is not limitative. For example, the adjusting mechanisms may be constructed to control the support mechanisms corresponding to the right and left wheels 27. Or the adjusting mechanisms may be constructed to control the support mechanisms corresponding to the right and left wheels 27 and the right and left wheels 43.
(9) In the foregoing embodiment, the adjusting mechanisms include the hydraulic cylinders 71, but this is not limitative. The adjusting mechanisms may include electric actuators in place of the hydraulic cylinders 71.
(10) In the foregoing embodiment, the indicator panel 12 communicates information to the rider. The indicator panel 12 may be modified to communicate information to vehicles or people around the saddle riding type vehicle 1.
(11) The foregoing embodiment illustrates a four-wheeled vehicle with the right and left wheels 27 at the front of the vehicle body and right and left wheels 43 at the rear of the vehicle body. A change may be made to a three-wheeled vehicle with a single wheel at the front or rear.
(12) The embodiment and the modifications described in (1) to (11) above may be further varied as appropriate by replacing or combining certain components with other modifications.

## Claims

1. A saddle riding type vehicle (1) capable of making turns by leaning a vehicle body, comprising:
a support mechanism (21L, 23L, 25L, 31L, 41L, 57L, 33, 51, 53, 55, 21R, 23R, 25R, 31R, 41R, 57R) for supporting at least a pair of wheels (27, 43) provided at opposite sides of the vehicle body to be movable up and down relative to the vehicle body;
an adjusting mechanism (71L, 71R, 80L, 80R) for operating the support mechanism to change a lean amount of the vehicle body;
a speed detector (91) for detecting vehicle speed; and
a controller (95) for controlling the adjusting mechanism (71 L, 71 R, 80L, 80R) based on results of detection by the speed detector (91), and
wherein the controller is arranged, when the vehicle speed is at a predetermined speed or less, for causing the adjusting mechanism (71 L, 71 R, 80L, 80R) to operate the support mechanism (21 L, 23L, 25L, 31 L, 41 L, 57L, 33, 51, 53, 55, 21 R, 23R, 25R, 31 R, 41R, 57R) and when the vehicle speed is higher than the predetermined speed, for prohibiting the adjusting mechanism (71 L, 71 R, 80L, 80R) from operating the support mechanism,
**characterized in that**
the adjusting mechanism (71 L, 71R, 80L, 80R) includes a hydraulic cylinder (71L, 71R) having a rod (75L, 75R) movable backward and forward, and is arranged to move the rod (75L, 75R) into direct contact with the support mechanism for moving the support mechanism.

2. The vehicle (1) according to claim 1, wherein the controller is arranged, when the vehicle speed is at a predetermined speed or less, for causing the adjusting mechanism (71L, 71R, 80L, 80R) to operate the support mechanism (21 L, 23L, 25L, 3 1 L, 41 L, 57L, 33, 51, 53, 55, 2 1 R, 23R, 25R, 31 R, 41 R, 57R) to decrease the lean amount of the vehicle body.

3. The vehicle (1) according to claim 1, wherein the adjusting mechanism (71 L, 71R, 80L, 80R) is arranged, when the controller (95) is at a stop, for maintaining a lean amount of the vehicle body as it was when the controller (95) stopped.

4. The vehicle (1) according to claim 1, wherein:
the adjusting mechanism (71 L, 71 R, 80L, 80R) is separable from the support mechanism (2 1 L, 23L, 25L, 31L, 41L, 57L, 33, 51, 53, 55, 21R, 23R, 25R, 31R, 41R, 57R); and
the controller (95) is arranged, when prohibiting the adjusting mechanism from operating the support mechanism (21 L, 23L, 25L, 31 L, 41 L, 57L, 33, 51, 53, 55, 21 R, 23R, 25R, 31R, 41R, 57R), for placing the adjusting mechanism (71L, 71R, 80L, 80R) and the support mechanism out of contact with each other.

5. The vehicle (1) according to claim 1, further comprising:
a lean angle detector (93) for detecting a lean angle of the vehicle body;
wherein the controller (95) is arranged, based on results of detection by the lean angle detector (93), for rendering variable an amount of operation by the adjusting mechanism of the support mechanism (21L, 23L, 25L, 31L, 41L, 57L, 33, 51, 53, 55, 21R, 23R, 25R, 31R, 41R, 57R).

6. The vehicle (1) according to claim 5, wherein the controller (95) is arranged, based on results of detection by the lean angle detector (93), when the vehicle speed is at a predetermined speed or less, for reducing the lean amount of the vehicle body to substantially 0 degree.

7. The vehicle according to claim 1, wherein the rod is, by moving forward, capable of pressing the support mechanism, and by moving backward, separable from the support mechanism.

8. The vehicle (1) according to claim 1, wherein:
the adjusting mechanism (71 L, 71 R, 80L, 80R) includes a hydraulic circuit (80L, 80R) for moving the rod (75L, 75R) backward and forward, and varying a forward moving speed of the rod (75L, 75R);
the hydraulic circuit (80L, 80R) being arranged, until the rod contacts the support mechanism (21L, 23L, 25L, 31L, 41L, 57L, 33, 51, 53, 55, 21R, 23R, 25R, 31R, 41R, 57R), for rendering the forward moving speed of the rod (75L, 75R) higher than when the rod (75L, 75R) is in contact with the support mechanism and presses the support mechanism.

9. The vehicle (1) according to claim 8, wherein the hydraulic circuit (80L, 80R) includes a pilot-operated direction control valve (86, 88) operable by a pressure of hydraulic oil corresponding to a reaction force received by the rod (75L, 75R), the hydraulic circuit (80L, 80R) being automatically switchable to a circuit for rendering the forward moving speed of the rod (75L, 75R) relatively low when the rod (75L, 75R) undergoes a predetermined reaction force.

10. The vehicle (1) according to claim 1, wherein the controller (95) is arranged, when prohibiting the adjusting mechanism (71L, 71R, 80L, 80R) from operating the support mechanism (21L, 23L, 25L, 31L, 41L, 57L, 33, 51, 53, 55, 21R, 23R, 25R, 31R, 41R, 57R), for moving the rod (75L, 75R) backward to a predetermined retracted position.

11. The vehicle (1) according to claim 10, further comprising:
a position detector (79) for detecting the rod (75L, 75R) located in the retracted position; and
an indicator (12) for displaying information relating to control of the lean amount of the vehicle body;
wherein the controller (95) is arranged, based on results of detection by the position detector (79), for causing the indicator (12) to display a warning when prohibiting the adjusting mechanism (71L, 71R, 80L, 80R) from operating the support mechanism (21L, 23L, 25L, 31L, 41 L, 57L, 33, 51, 53, 55, 21R, 23R, 25R, 31 R, 41 R, 57R), and the rod (75L, 75R) is determined absent from the retracted position.

12. The vehicle (1) according to claim 10, further comprising:
a position detector (79) for detecting the rod (75L, 75R) located in the retracted position;
wherein the controller (95) is arranged, based on results of detection by the position detector (79), for limiting the vehicle speed to a predetermined speed or less when prohibiting the adjusting mechanism (71L, 71R, 80L, 80R) from operating the support mechanism (21L, 23L, 25L, 31L, 41L, 57L, 33, 51, 53, 55, 21R, 23R, 25R, 31R, 41 R, 57R), and the rod (75L, 75R) is determined absent from the retracted position.

13. The vehicle (1) according to claim 1, wherein:
the pair of wheels (27, 43) are a right wheel (27R, 43R) and a left wheel (27L, 43L);
the support mechanism (21L, 23L, 25L, 31L, 41L, 57L, 33, 51, 53, 55, 21R, 23R, 25R, 31R, 41R, 57R) includes:
a right support member (21 R, 23R, 25R, 41 R) for supporting the right wheel (27R, 43R) to be movable up and down;
a left support member (21L, 23L, 25L, 41L) for supporting the left wheel (27L, 43L) to be movable up and down; and
a balancer member (31L, 31 R, 33, 51, 53, 55, 57L, 57R) interlocked to the right support mechanism and the left support mechanism and rotatably supported by the vehicle body, for causing the right wheel (27R, 43R) and the left wheel (27L, 43L) to move up and down in an equal quantity and in opposite directions; and
the adjusting mechanism (71L, 71 R, 80L, 80R) includes:
a right adjusting mechanism (71 R, 80R) for operating the right support member to adjust a height position of the right wheel (27R, 43R) relative to the vehicle body; and
a left adjusting mechanism (71L, 80L) for operating the left support member to adjust a height position of the left wheel (27L, 43L) relative to the vehicle body.

## Patentansprüche

1. Ein Sattelfahrtypfahrzeug (1), das in der Lage ist, Kurven zu fahren, durch Neigen eines Fahrzeugkörpers, das folgende Merkmale aufweist:
einen Stützmechanismus (21L, 23L, 25L, 31L, 41L, 57L, 33, 51, 53, 55, 21R, 23R, 25R, 31R, 41R, 57R) zum Stützen von zumindest einem Paar aus Rädern (27, 43), die auf gegenüberliegenden Seiten des Fahrzeugkörpers bereitgestellt sind, um auf und ab relativ zu dem Fahrzeugkörper bewegbar zu sein;
einen Einstellmechanismus (71L, 71R, 80L, 80R) zum Betreiben des Stützmechanismus, um einen Neigungsbetrag des Fahrzeugkörpers zu ändern;
einen Geschwindigkeitsdetektor (91) zum Erfassen der Fahrzeuggeschwindigkeit; und
eine Steuerung (95) zum Steuern des Einstellmechanismus (71L, 71 R, 80L, 80R) basierend auf Ergebnissen der Erfassung durch den Geschwindigkeitsdetektor (91), und
wobei die Steuerung angeordnet ist, wenn die Fahrzeuggeschwindigkeit bei einer vorbestimmten Geschwindigkeit oder kleiner ist, zu verursachen, dass der Einstellmechanismus (71L, 71 R, 80L, 80R) den Stützmechanismus (21L, 23L, 25L, 31 L, 41L, 57L, 33, 51, 53, 55, 21R, 23R, 25R, 31R, 41R, 57R) betätigt, und wenn die Fahrzeuggeschwindigkeit höher ist als die vorbestimmte Geschwindigkeit, zu verhindern, dass der Einstellmechanismus (71L, 71 R, 80L, 80R) den Stützmechanismus betätigt,
**dadurch gekennzeichnet, dass**
der Einstellmechanismus (71L, 71 R, 80L, 80R) einen hydraulischen Zylinder (71L, 71R) umfasst, mit einer Stange (75L, 75R), die rückwärts und vorwärts bewegbar ist, und angeordnet ist, um den Stab (75L, 75R) in direkten Kontakt mit dem Stützmechanismus zum Bewegen des Stützmechanismus zu bewegen.

2. Das Fahrzeug (1) gemäß Anspruch 1, bei dem die Steuerung angeordnet ist, wenn die Fahrzeuggeschwindigkeit bei einer vorbestimmten Geschwindigkeit oder kleiner ist, zu verursachen, dass der Einstellmechanismus (71L, 71R, 80L, 80R) den Stützmechanismus (21L, 23L, 25L, 31L, 41L, 57L, 33, 51, 53, 55, 21R, 23R, 25R, 31R, 41R, 57R) betreibt, um den Neigungsbetrag des Fahrzeugkörpers zu verringern.

3. Das Fahrzeug (1) gemäß Anspruch 1, bei dem der Einstellmechanismus (71L, 71 R, 80L, 80R) angeordnet ist, wenn die Steuerung (95) an einem Stopp ist, um einen Neigungsbetrag des Fahrzeugkörpers so beizubehalten, wie er war, als die Steuerung (95) gestoppt wurde.

4. Das Fahrzeug (1) gemäß Anspruch 1, bei dem:
der Einstellmechanismus (71L, 71R, 80L, 80R) von dem Stützmechanismus (21L, 23L, 25L, 31L, 41L, 57L, 33, 51, 53, 55, 21R, 23R, 25R, 31R, 41R, 57R) trennbar ist; und
die Steuerung (95) angeordnet ist, wenn sie verhindert, dass der Einstellmechanismus den Stützmechanismus (21L, 23L, 25L, 31L, 41L, 57L, 33, 51, 53, 55, 21R, 23R, 25R, 31 R, 41R, 57R) betätigt, um den Einstellmechanismus (71L, 71 R, 80L, 80R) und den Stützmechanismus außer Kontakt im Hinblick aufeinander zu platzieren.

5. Das Fahrzeug (1) gemäß Anspruch 1, das ferner folgende Merkmale aufweist:
einen Neigungswinkeldetektor (93) zum Erfassen eines Neigungswinkels des Fahrzeugkörpers;
wobei die Steuerung (95) angeordnet ist, basierend auf Ergebnissen der Erfassung durch den Neigungswinkeldetektor (93), einen Betrag der Betätigung durch den Einstellmechanismus des Stützmechanismus (21 L, 23L, 25L, 31L, 41 L, 57L, 33, 51, 53, 55, 21R, 23R, 25R, 31R, 41R, 57R) variabel zu machen.

6. Das Fahrzeug (1) gemäß Anspruch 5, bei dem die Steuerung (95) angeordnet ist, um basierend auf Ergebnissen der Erfassung durch den Neigungswinkeldetektor (93), wenn die Fahrzeuggeschwindigkeit bei einer vorbestimmten Geschwindigkeit oder kleiner ist, den Neigungsbetrag des Fahrzeugkörpers im Wesentlichen auf 0 Grad zu reduzieren.

7. Das Fahrzeug gemäß Anspruch 1, bei dem die Stange durch Vorwärtsbewegen in der Lage ist, den Stützmechanismus zu drücken und durch Rückwärtsbewegen von dem Stützmechanismus trennbar ist.

8. Das Fahrzeug (1) gemäß Anspruch 1, bei dem:
der Einstellmechanismus (71L, 71R, 80L, 80R) eine hydraulische Schaltung (80L, 80R) zum Rückwärts- und Vorwärts-Bewegen der Stange (75L, 75R) und Variieren einer Vorwärtsbewegungsgeschwindigkeit der Stange (75L, 75R) umfasst;
wobei die hydraulische Schaltung (80L, 80R) angeordnet ist, bis die Stange den Stützmechanismus (21L, 23L, 25L, 31L, 41L, 57L, 33, 51, 53, 55, 21R, 23R, 25R, 31R, 41R, 57R) kontaktiert, die Vorwärtsbewegungsgeschwindigkeit der Stange (75L, 75R) höher zu machen als wenn die Stange (75L, 75R) in Kontakt mit dem Stützmechanismus ist und den Stützmechanismus drückt.

9. Das Fahrzeug (1) gemäß Anspruch 8, bei dem die hydraulische Schaltung (80L, 80R) ein pilotbetriebenes Richtungssteuerventil (86, 88) umfasst, das durch einen Druck eines Hydrauliköls betreibbar ist, der einer Reaktionskraft entspricht, die durch die Stange (75L, 75R) erhalten wird, wobei die hydraulische Schaltung (80L, 80R) automatisch zu einer Schaltung schaltbar ist, um die Vorwärtsbewegungsgeschwindigkeit der Stange (75L, 75R) relativ niedrig zu machen, wenn die Stange (75L, 75R) einer vorbestimmten Reaktionskraft ausgesetzt ist.

10. Das Fahrzeug (1) gemäß Anspruch 1, bei dem die Steuerung (95) angeordnet ist, wenn verhindert wird, dass der Einstellmechanismus (71 L, 71 R, 80L, 80R) den Stützmechanismus (21L, 23L, 25L, 31L, 41L, 57L, 33, 51, 53, 55, 21R, 23R, 25R, 31R, 41R, 57R) betätigt, um die Stange (75L, 75R) rückwärts in eine vorbestimmte eingefahrene Position zu bewegen.

11. Das Fahrzeug (1) gemäß Anspruch 10, das ferner folgende Merkmale aufweist:
einen Positionsdetektor (79) zum Erfassen der Stange (75L, 75R), die in der eingefahrenen Position angeordnet ist; und
einen Indikator (12) zum Anzeigen von Informationen, die sich auf die Steuerung des Neigungsbetrags des Fahrzeugkörpers beziehen;
wobei die Steuerung (95) angeordnet ist, um basierend auf Ergebnissen der Erfassung durch den Positionsdetektor (79) zu verursachen, dass der Indikator (12) eine Warnung anzeigt, wenn der Einstellmechanismus (71 L, 71 R, 80L, 80R) daran gehindert wird, den Stützmechanismus (21L, 23L, 25L, 31L, 41L, 57L, 33, 51, 53, 55, 21R, 23R, 25R, 31R, 41R, 57R) zu betätigen, und bestimmt wird, dass die Stange (75L, 75R) nicht in der eingefahrenen Position ist.

12. Das Fahrzeug (1) gemäß Anspruch 10, das ferner folgende Merkmale aufweist:
einen Positionsdetektor (79) zum Erfassen der Stange (75L, 75R), die sich in der eingefahrenen Position befindet;
wobei die Steuerung (75) angeordnet ist, um basierend auf Ergebnissen der Erfassung durch den Positionsdetektor (79), die Fahrzeuggeschwindigkeit auf eine vorbestimmte Geschwindigkeit oder weniger einzuschränken, wenn verhindert wird, dass der Einstellmechanismus (71L, 71R, 80L, 80R) den Stützmechanismus (21L, 23L, 25L, 31L, 41 L, 57L, 33, 51, 53, 55, 21R, 23R, 25R, 31R, 41R, 57R) betätigt und bestimmt wird, dass die Stange (75L, 75R) nicht in der eingefahrenen Position ist.

13. Das Fahrzeug (1) gemäß Anspruch 1, bei dem:
das Paar aus Rädern (27, 43) ein rechtes Rad (27R, 43R) und ein linkes Rad (27L, 43L) sind;
der Stützmechanismus (21L, 23L, 25L, 31L, 41L, 57L, 33, 51, 53, 55, 21R, 23R, 25R, 31R, 41R, 57R) Folgendes umfasst:
ein rechtes Stützbauglied (21R, 23R, 25R, 41R) zum Stützen des rechten Rads (27R, 43R), um aufwärts und abwärts bewegbar zu sein;
ein linkes Stützbauglied (21L, 23L, 25L, 41L) zum Stützen des linken Rads (27L, 43L), um aufwärts und abwärts bewegbar zu sein; und
ein Ausgleichsbauglied (31L, 31R, 33, 51, 53, 55, 57L, 57R), das mit dem rechten Stützmechanismus und dem linken Stützmechanismus verriegelt ist und drehbar durch den Fahrzeugkörper gestützt wird, um zu verursachen, dass sich das rechte Rad (27R, 43R) und das linke Rad (27L, 43L) aufwärts und abwärts um einen gleichen Betrag und in entgegengesetzten Richtungen bewegen; und
der Einstellmechanismus (71 L, 71 R, 80L, 80R) Folgendes umfasst:
einen rechten Einstellmechanismus (71 R, 80R), um zu verursachen, dass das rechte Stützbauglied eine Höhenposition des rechten Rads (27R, 43R) relativ zu dem Fahrzeugkörper einstellt; und
einen linken Einstellmechanismus (71L, 80L), um zu verursachen, dass das linke Stützbauglied eine Höhenposition des linken Rads (27L, 43L) relativ zu dem Fahrzeugkörper einstellt.

## Revendications

1. Véhicule du type à selle (1) à même de prendre des virages en inclinant un corps de véhicule, comprenant:
un mécanisme de support (21L, 23L, 25L, 31L, 41L, 57L, 33, 51, 53, 55, 21R, 23R, 25R, 31R, 41R, 57R) destiné à supporter au moins une paire de roues (27, 43) prévues sur des côtés opposés du corps de véhicule de manière à pouvoir se déplacer vers le haut et vers le bas par rapport au corps de véhicule;
un mécanisme d'ajustement (71L, 71R, 80L, 80R) destiné à faire fonctionner le mécanisme de support pour modifier une quantité d'inclinaison du corps de véhicule;
un détecteur de vitesse (91) destiné à détecter la vitesse du véhicule; et
un contrôleur (95) destiné à commander le mécanisme d'ajustement (71L, 71R, 80L, 80R) sur base des résultats de détection par le détecteur de vitesse (91), et
dans lequel le contrôleur est aménagé pour faire, lorsque la vitesse du véhicule est à une vitesse prédéterminée ou inférieure, que le mécanisme d'ajustement (71L, 71R, 80L, 80R) fasse fonctionner le mécanisme de support (21L, 23L, 25L, 31L, 41L, 57L, 33, 51, 53, 55, 21R, 23R, 25R, 31R, 41R, 57R) et empêcher, lorsque la vitesse du véhicule est supérieure à la vitesse prédéterminée, que le mécanisme d'ajustement (71L, 71R, 80L, 80R) ne fasse fonctionner le mécanisme de support,
**caractérisé par le fait que**
le mécanisme d'ajustement (71L, 71R, 80L, 80R) comporte un cylindre hydraulique (71L, 71R) présentant une tige (75L, 75R) pouvant se déplacer en arrière et en avant et est aménagé pour déplacer la tige (75L, 75R) en contact direct avec le mécanisme de support pour déplacer le mécanisme de support.

2. Véhicule (1) selon la revendication 1, dans lequel le contrôleur est aménagé pour faire, lorsque la vitesse du véhicule est à une vitesse prédéterminée ou inférieure, que le mécanisme d'ajustement (71L, 71R, 80L, 80R) fasse fonctionner le mécanisme de support (21L, 23L, 25L, 31L, 41L, 57L, 33, 51, 53, 55, 21R, 23R, 25R, 31R, 41R, 57R) pour diminuer la quantité d'inclinaison du corps de véhicule.

3. Véhicule selon la revendication 1, dans lequel le mécanisme d'ajustement (71L, 71R, 80L, 80R) est aménagé pour maintenir, lorsque le contrôleur (95) est à l'arrêt, une quantité d'inclinaison du corps de véhicule telle qu'elle était lorsque le contrôleur (95) s'est arrêté.

4. Véhicule selon la revendication 1, dans lequel:
le mécanisme d'ajustement (71L, 71R, 80L, 80R) peut être dégagé du mécanisme de support (21L, 23L, 25L, 31L, 41L, 57L, 33, 51, 53, 55, 21R, 23R, 25R, 31R, 41R, 57R); et
le contrôleur (95) est aménagé pour placer, lorsqu'il empêche que le mécanisme d'ajustement ne fasse fonctionner le mécanisme de support (21L, 23L, 25L, 31L, 41L, 57L, 33, 51, 53, 55, 21R, 23R, 25R, 31R, 41R, 57R), le mécanisme d'ajustement (71L, 71R, 80L, 80R) et le mécanisme de support hors contact l'un avec l'autre.

5. Véhicule (1) selon la revendication 1, comprenant par ailleurs:
un détecteur d'angle d'inclinaison (93) destiné à détecter un angle d'inclinaison du corps de véhicule;
dans lequel le contrôleur (95) est aménagé pour rendre variable, sur base des résultats de détection par le détecteur d'angle d'inclinaison (93), une quantité de fonctionnement par le mécanisme d'ajustement du mécanisme de support (21L, 23L, 25L, 31L, 41L, 57L, 33, 51, 53, 55, 21R, 23R, 25R, 31R, 41R, 57R).

6. Véhicule (1) selon la revendication 5, dans lequel le contrôleur (95) est aménagé pour réduire, sur base des résultats de détection par le détecteur d'angle d'inclinaison (93), lorsque la vitesse du véhicule est à une vitesse prédéterminée ou inférieure, la quantité d'inclinaison du corps de véhicule sensiblement à 0 degrés.

7. Véhicule (1) selon la revendication 5, dans lequel la tige est, en se déplaçant en avant, à même d'appuyer sur le mécanisme de support et, en se déplaçant vers l'arrière, de se dégager du mécanisme de support.

8. Véhicule (1) selon la revendication 1, dans lequel:
le mécanisme d'ajustement (71L, 71R, 80L, 80R) comporte un circuit hydraulique (80L, 80R) destiné à déplacer la tige (75L, 75R) en arrière et en avant, et à faire varier une vitesse de déplacement en avant de la tige (75L, 75R);
le circuit hydraulique (80L, 80R) étant aménagé pour rendre, jusqu'à ce que la tige entre en contact avec le mécanisme de support (21L, 23L, 25L, 31L, 41L, 57L, 33, 51, 53, 55, 21R, 23R, 25R, 31R, 41R, 57R), la vitesse de déplacement en avant de la tige (75L, 75R) supérieure à ce qu'elle est lorsque la tige (75L, 75R) est en contact avec le mécanisme de support et appuie sur le mécanisme de support.

9. Véhicule (1) selon la revendication 8, dans lequel le circuit hydraulique (80L, 80R) comporte une soupape de commande de direction actionnée par pilote (86, 88) actionnable par une pression d'huile hydraulique correspondant à une force de réaction reçue par la tige (75L, 75R), le circuit hydraulique (80L, 80R) pouvant être commuté automatiquement en un circuit pour rendre la vitesse de déplacement en avant de la tige (75L, 75R) relativement basse lorsque la tige (75L, 75R) subit une force de réaction prédéterminée.

10. Véhicule (1) selon la revendication 1, dans lequel le contrôleur (95) est aménagé pour déplacer, lorsque le mécanisme d'ajustement (71L, 71 R, 80L, 80R) est empêché de faire fonctionner le mécanisme de support (21L, 23L, 25L, 31L, 41L, 57L, 33, 51, 53, 55, 21R, 23R, 25R, 31R, 41R, 57R), la tige (75L, 75R) en arrière à une position rétractée prédéterminée.

11. Véhicule (1) selon la revendication 10, comprenant par ailleurs:
un détecteur de position (79) destiné à détecter la tige (75L, 75R) située dans la position rétractée; et
un indicateur (12) destiné à afficher l'information relative à la commande de la quantité d'inclinaison du corps de véhicule;
dans lequel le contrôleur (95) est aménagé pour faire, sur base des résultats de détection par le détecteur de position (79), que l'indicateur (12) affiche un avertissement lorsque le mécanisme d'ajustement (71L, 71R, 80L, 80R) est empêché de faire fonctionner le mécanisme de support (21L, 23L, 25L, 31L, 41L, 57L, 33, 51, 53, 55, 21R, 23R, 25R, 31R, 41R, 57R) et que la tige (75L, 75R) est déterminée comme étant absente de la position rétractée.

12. Véhicule (1) selon la revendication 10, comprenant par ailleurs:
un détecteur de position (79) destiné à détecter la tige (75L, 75R) se trouvant en position rétractée;
dans lequel le contrôleur (95) est aménagé pour limiter, sur base des résultats de détection par le détecteur de position (79), la vitesse du véhicule à une vitesse prédéterminée ou inférieure lorsque le mécanisme d'ajustement (71L, 71R, 80L, 80R) est empêché de faire fonctionner le mécanisme de support (21L, 23L, 25L, 31L, 41L, 57L, 33, 51, 53, 55, 21R, 23R, 25R, 31R, 41R, 57R) et que la tige (75L, 75R) est déterminée comme étant absente de la position rétractée.

13. Véhicule (1) selon la revendication 1, dans lequel:
la paire de roues (27, 43) sont une roue droite (27R, 43R) et une roue gauche (27L, 43L);
le mécanisme de support (21L, 23L, 25L, 31L, 41L, 57L, 33, 51, 53, 55, 21R, 23R, 25R, 31R, 41R, 57R) comporte:
un élément de support droit (21R, 23R, 35R, 41R) destiné à supporter la roue droite (27R, 43R) de manière à pouvoir se déplacer vers le haut et le bas;
un élément de support gauche (21L, 23L, 25L, 41L) destiné à supporter la roue gauche (27L, 43L) de manière à pouvoir se déplacer vers le haut et le bas; et
un élément balancier (31L, 31R, 33, 51, 53, 55, 57L, 57R) interverrouillé au mécanisme de support droit et au mécanisme de support gauche et supporté de manière rotative par le corps de véhicule, destiné à faire déplacer la roue droite (27R, 43R) et la roue gauche (27L, 43L) vers le haut et vers le bas d'une quantité égale et en directions opposées; et
le mécanisme d'ajustement (71L, 71R, 80L, 80R) comporte:
un mécanisme d'ajustement droit (71R, 80R) destiné à faire fonctionner l'élément de support droit pour ajuster une position en hauteur de la roue droite (27R, 43R) par rapport au corps de véhicule; et
un mécanisme d'ajustement gauche (71L, 80L) destiné à faire fonctionner l'élément de support gauche pour ajuster une position en hauteur de la roue gauche (27L, 43L) par rapport au corps de véhicule.
